Europäisches Patentamt

European Patent Office

Office européen des brevets

(19)

(11) Veröffentlichungsnummer: **0 231 761 B1**

(12) # EUROPÄISCHE PATENTSCHRIFT

(45) Veröffentlichungstag der Patentschrift: **03.06.92**

(51) Int. Cl.⁵: **B62D 63/08**, B62D 21/09, B62D 21/10, B62D 21/20

(21) Anmeldenummer: **87100219.2**

(22) Anmeldetag: **09.01.87**

(54) **Anhänger für Lastkraftwagen.**

(30) Priorität: **20.01.86 DE 3601459**

(43) Veröffentlichungstag der Anmeldung:
**12.08.87 Patentblatt 87/33**

(45) Bekanntmachung des Hinweises auf die Patenterteilung:
**03.06.92 Patentblatt 92/23**

(84) Benannte Vertragsstaaten:
**AT BE DE NL**

(56) Entgegenhaltungen:
**CH-A- 376 370**
**FR-A- 1 067 596**

(73) Patentinhaber: **Maschinenfabriken Bernard Krone GmbH**
**Heinrich-Krone-Strasse 10**
**W-4441 Spelle(DE)**

(72) Erfinder: **Focks, Hubert**
**Erlenweg 36**
**W-4450 Lingen(DE)**

(74) Vertreter: **Busse & Busse Patentanwälte**
**Postfach 1226 Grosshandelsring 6**
**W-4500 Osnabrück(DE)**

EP 0 231 761 B1

Rank Xerox (UK) Business Services

**Beschreibung**

Die Erfindung bezieht sich auf einen Anhänger für Lastkraftwagen od.dgl. Zugmaschinen in einer Ausbildung gemäß dem Oberbegriff des Anspruchs 1.

Bei einem bekannten Anhänger dieser Art (DE-A 10 50 667) ist der Ringsegmentbereich des Chassis von einem integralen, ein nach unten offenes U-Profil aufweisenden Ringkörper gebildet, der eine Vergrößerung der Höhe des Laderaums erlaubt, jedoch nicht in der Lage ist, höhere Achslasten aufzunehmen und dem Chassis eine Formstabilität zu verleihen, wie sie für Anhänger ohne versteifende Aufbauten für einwandfreie Laufeigenschaften und hinreichende Lebensdauer erforderlich ist.

Der Erfindung liegt die Aufgabe zugrunde, einen Anhänger der genannten Art mit einem Ringsegmentbereich zu schaffen, der bei optimierter Laderaumhöhe und voller Ausnutzung jeweils zulässiger Achshöchstlasten eine allen Belastungen gewachsene Stabilität aufweist.

Die Erfindung löst diese Aufgabe mit den Merkmalen des Anspruchs 1.

Der Aufbau des Ringsegmentbereiches des Anhängers nach der Erfindung aus gesonderten, untereinander verbundenen Formteilen ermöglicht deren unabhängige, typgerechte Gestaltung und Dimensionierung, durch die bei einfacher Ausbildung allen Stabilitätsanforderungen Rechnung getragen werden können. Die U-Profilstreben mit ihren einander zugewandten Schenkeln erbringen hohe Festigkeitswerte auf kleinem Raum, ermöglichen eine einfache Formgebung durch Biegen frei von Festigkeitseinbußen und sind zuverlässig und einfach mit der Tragplatte verbindbar, wobei das Vorsehen eines inneren Versteifungsträgers mit geringerer Querschnittsabmessung als Abstützung für den Kugellenkkranz der Vorderachse eine den Laderaum zusätzlich vergrößernde Tieferlegung der Ladefläche des Chassis erlaubt.

Hinsichtlich weiterer Ausgestaltungen der Erfindung wird auf die Ansprüche 2 bis 4, die Zeichnung und die nachfolgende Beschreibung verwiesen. In der Zeichnung zeigen:

Fig. 1  eine schematische Draufsicht eines erfindinngsgemäßen Anhängers;

Fig. 2  eine vergrößerte Draufsicht der Tragplatte des in Fig. 1 dargestellten Ausführungsbeispiels;

Fig. 3  einen abgebrochenen Querschnitt entsprechend der Schnittlinie III-III in Fig. 2;

Fig. 4  das in Fig. 1 gezeigte Ausführungsbeispiel in einer Querschnittsdarstellung entsprechend der Schnittlinie IV-IV;

Fig. 5  in einer Querschnittsdarstellung den Anhänger nach Fig. 1 entsprechend der Schnittlinie V-V;

Fig. 6  einen abgebrochenen Längsschnitt des in Fig. 1 gezeigen Ausführungsbeispiels gemäß der Schnittlinie VI-VI.

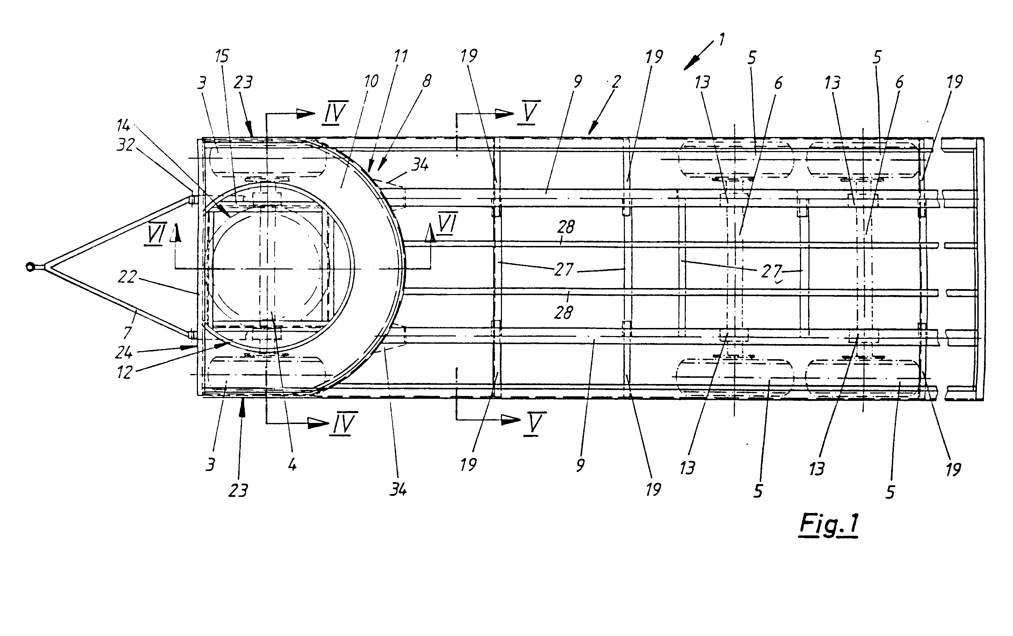

In der Zeichnung sind nur die zum unmittelbaren Verständnis der Erfindung gezeigten Bauelemente des erfindungsgemäßen Anhängers dargestellt sowie gleichwirkende Teile mit gleichen Bezugsziffern versehen. Allgemein mit 1 ist der erfindungsgemäße Anhänger bezeichnet, der mit einem Chassis 2, Vorderrädern 3, einer Vorderachse 4, Hinterrädern 5, zwei Hinterachsen 6 sowie einer Zugdeichsel 7 versehen ist. Der Anhänger weist einen Boden 17 auf, der über eine Halterung 16 an dem Chassis 2 befestigt ist, und kann irgendeinen Aufbau, z.B. einen Pritschen- oder einen Kastenaufbau aufweisen, der nicht näher dargestellt ist. Das Chassis 2 umfaßt ein Tragwerk 8 und Längsträger 9, die an dem eine Tragplatte 10 umfassenden Tragwerk 8 befestigt sind. Die Tragplatte 10 ist in dem Ausführungsbeispiel nach Fig. 1 bis 6 als ein Ringsegmentkörper ausgebildet, der in Draufsicht die Grundform eines Halbringes aufweist, der sich konzenzentrisch zur Lenkhochachse der Vorderachse 4 erstreckt. Der Ringsegmentkörper 10 ist seitlich parallel zur gezeigten Geradeausfahrtstellung der Vorderräder 3 geradlinig begrenzt, und diese geraden Außenkanten 23 fallen mit der Seitenbegrenzung des Anhängers 1 zusammen. Nach vorne hin an seiner vorderen Außenkante 24 ist der Ringsegmentkörper 10 ebenfalls geradlinig von einem sich bis zu den Außenkanten 23 erstreckenden Querträger 22 begrenzt und somit in Draufsicht mit einem vorderseitig abgeschnittenen und seitlich begradigten Kreisring vergleichbar. Der Ringsegmentkörper 10 ist entlang seiner Ränder unterseitig mit einem äußeren Versteifungsträger 11 und einem inneren Versteifungsträger 12 versehen. In dem gezeigten Ausführungsbeispiel wird die Tragplatte 10 ausschließlich von dem Ringsegmentkörper gebildet, der in material- und gewichtssparender Weise mit dem äußeren Versteifungsträger 11 und dem inneren Versteifungsträger 12 abschließt.

Durch die ringsegmentförmige Ausbildung, die geringe Breite und die Versteifungsträger 11,12 ist das Tragwerk 8 außerordentlich starr und verwindungssteif, so daß es bei einem Optimum an möglicher Ladehöhe höchsten Belastungen gerecht wird. Der äußere Versteifungsträger 11 verläuft außerhalb des Bewegungsbereichs der Vorderräder 3 und ist in seinem die Verwindungssteifigkeit des Tragwerks bestimmenden Hauptteil beliebig dimensionierbar. Am äußeren Versteifungsträger 11 sind die Längsträger 9 des Chassis 2 befestigt, die eine innenliegende Anordnung oberhalb von Achsabstützungen 13 der Hinterachsen 6 aufweisen. Die innenliegenden Längsträger 9 erstrecken sich bis zu dem äußeren Versteifungsträger 12 und sind mit diesem verbunden, so daß der Lenkbewegungsbereich der Vorderräder 3 durch die innenliegende Anordnung der Längsträger 9 nicht beeinträchtigt ist. Durch die innenliegende Anordnung der Längsträger 9 ist die direkte Abstützung der Hinterachsen 6 an den Längsträgern 9 ermöglicht, so daß eine aufwendige Versteifungskonstruktion entbehrlich ist.

Zur Abstützung und Schwenkführung der Vorderachse 4 ist ein Kugellenkkranz 14 vorgesehen, der seinerseits über einen quadratisch gestalteten Tragrahmen 15 am Tragwerk 8 befestigt ist. Der Tragrahmen 15 besteht aus Doppel-T-Trägern und ist in dem gezeigten Ausführungsbeispiel an seinen Eckpunkten mit dem inneren Versteifungsträger 12 verschweißt. Zur weiteren Abstützung und zur Stabilität ist das Chassis 2 noch mit Querstreben 27 und Längsstreben 28 versehen.

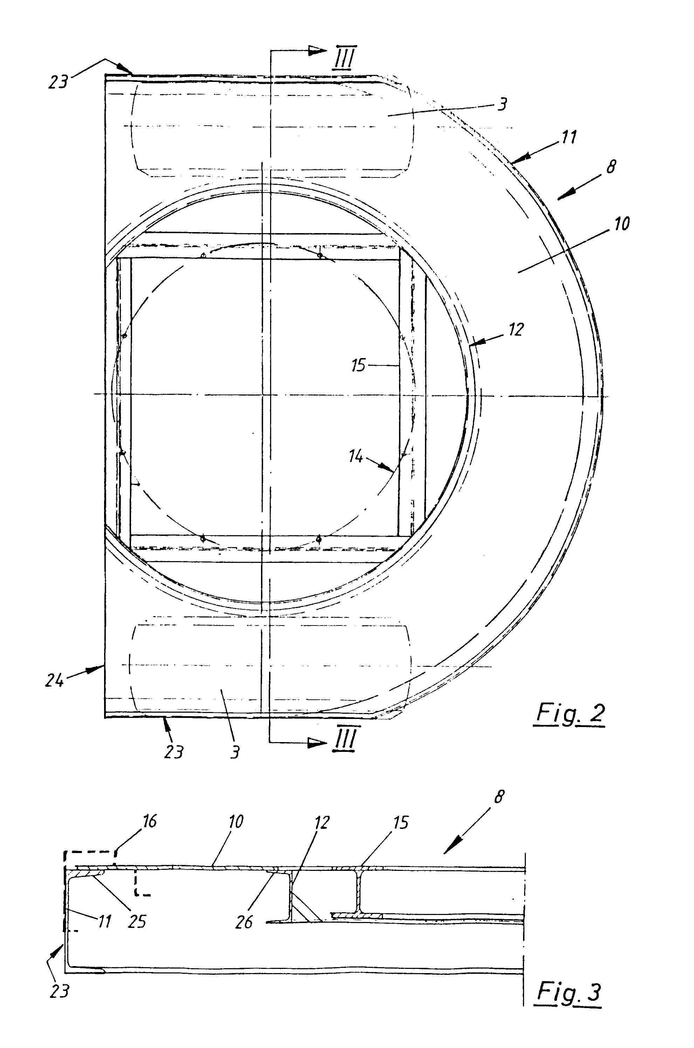

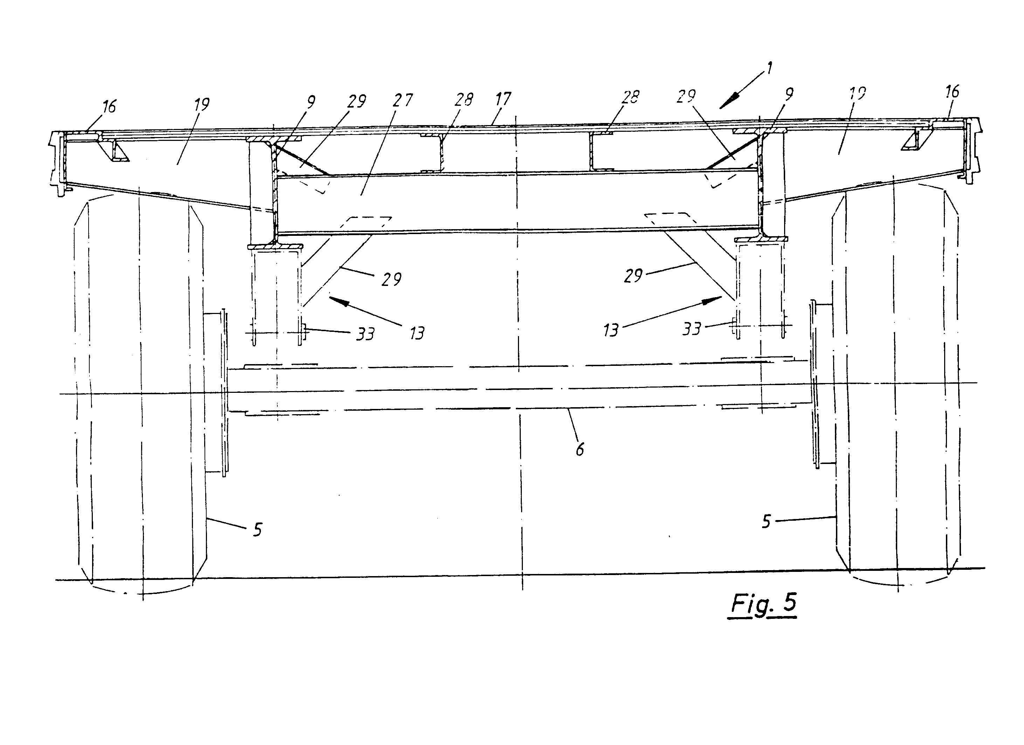

Wie aus der in Fig. 3 gezeigten Querschnittsdarstellung des in Fig. 2 vergrößert dargestellten Ringsegmentkörpers 10 hervorgeht, sind der äußere Versteifungsträger 11 und der innere Versteifungsträger 12 im Querschnitt U-förmig ausgebildet, wobei der äußere Versteifungsträger 11, an dem die Längsträger 9 des Chassis 2 angreifen, stärker dimensioniert ist als der innere Versteifungsträger 12. Die Träger 11 und 12 oder einer von ihnen, z.B. der innere Versteifungsträger 12, können aber ebenfalls Doppel-T-förmig gestaltet sein. Gleichfalls ist es möglich, die Tragplatte 10 und die Versteifungsträger 11 und 12 als ein-oder mehrteilige Preß- oder Gußeinheit auszubilden und/oder Platte 10 und Träger 11 und 12 tunnelartig zu gestalten. Gestrichelt dargestellt ist in Fig. 3 eine Halterung 16 für den Hängerboden 17, die ein treppenartiges Querschnittsprofil aufweist und hinter der Tragplatte 10 teilweise in Freiräumen innerhalb der Außenträger 19 verläuft, wie dies im einzelnen näher in Fig. 5 veranschaulicht ist. Die Schenkel 25,26 der U-förmigen Versteifungsträger 11 und 12 sind einander zugewandt, so daß die ringsegmentförmige Tragplatte 10 in geringer Breite äußerst verwindungssteif an dem jeweils oberen Schenkel der beiden Schenkel 25 bzw. 26 befestigt ist.

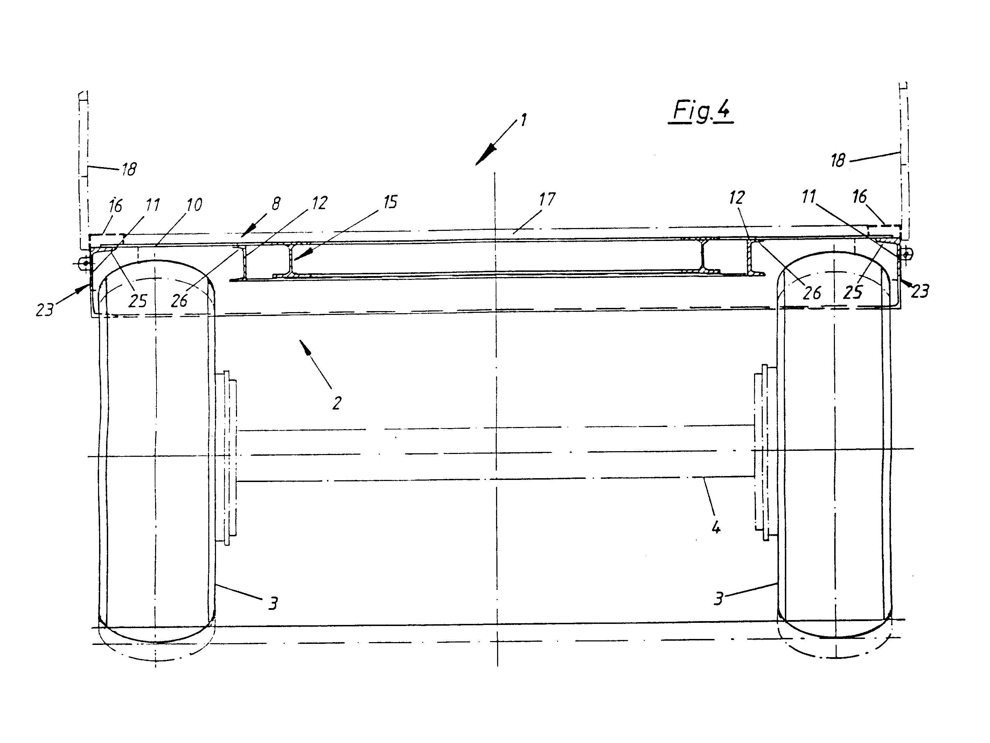

In Fig. 4 ist veranschaulicht, daß die für den quadratischen Tragrahmen 15 zusammengesetzten Träger ein Doppel-T-förmiges Querschnittsprofil haben, so daß der Tragrahmen 15 bei hinreichender Stabilität und in baulich einfacher Weise an dem Tragwerk 8 befestigt und als Anlagefläche zur Befestigung des Kugellenkkranzes 14 genutzt werden kann. Der Kugellenkkranz 14 kann jedoch auch an dem inneren Versteifungsträger 12 direkt befestigt sein, wobei dieser dann bevorzugt mit Doppel-T-förmigen Querschnittsprofil ausgebildet ist. Zusätzlich ist in Fig. 4 durch die strichpunktierte Darstellung der Vorderräder 3 der Abstand zwischen der Unterseite der ringsegmentförmigen Tragplatte 10 und der Lauffläche der Vorderräder im ein- und ausgefederten Zustand der Vorderachse 4 veranschaulicht und an den seitlichen Außenkanten 23 der Tragplatte 10 eine Anhängerbeplankung 18 angedeutet.

In Fig. 5 ist näher die direkte Abstützung 13 der Hinterachsen 6 an den innenliegenden Längsträgern 9 veranschaulicht. Diese direkte Abstützung 13 der Hinterachsen 6 erfolgt über schematisch angedeutete Federschuhe 33, die direkt an den Längsträgern 9 angreifen. Zwischen den Längsträgern 9 erstrecken sich Querstreben 27, an denen Längsstreben 28 mit einem U-förmigen Querschnittsprofil befestigt sind, die neben den Doppel-T-förmig gestalteten Längsträgern 9 eine Auflagefläche für den Hängerboden 17 bilden. An der gezeigten Querstrebe 27 greifen zusätzlich noch schrägverlaufende Stützstreben 29 zur Versteifung der Achsabstützung 13 bzw. der Hängerbodenabstützung an.

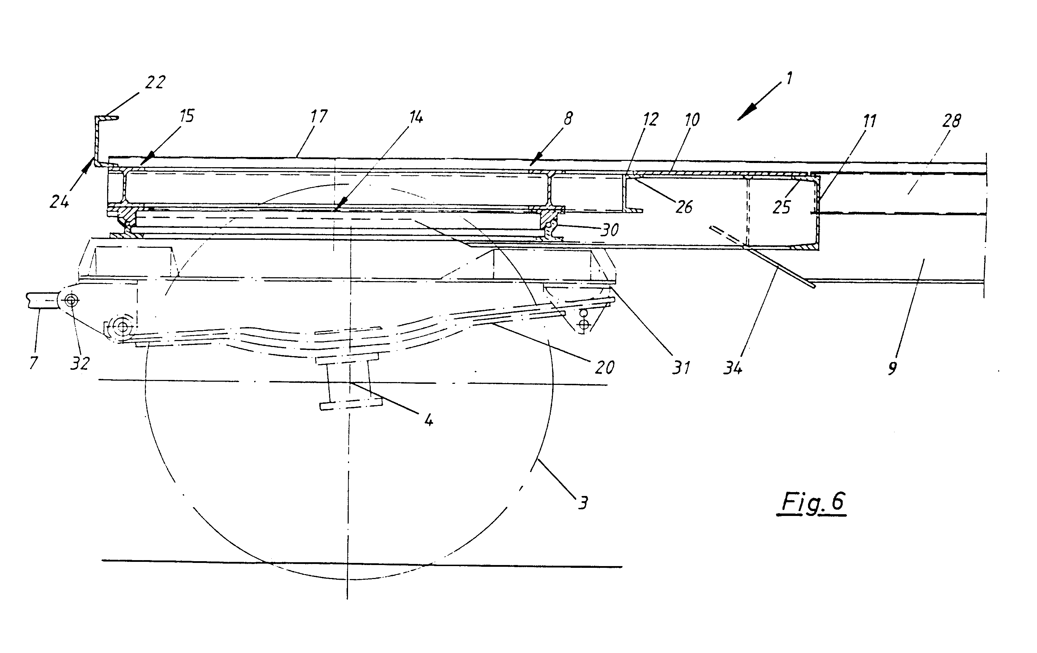

Fig. 6 zeigt in einer Längsschnittdarstellung den erfingungsgemäßen Hänger im Bereich seiner Vorderräder 3. Die Vorderachse 4 ist über Blattfedern 20 abgestützt und an dem Kugellenkkranz 14 über Verbindungsflansche 31 drehbar befestigt. Der Kugellenkkranz 14 ist fest mit seiner oberen Halbschale mit dem Tragrahmen 15 verbunden. Der Drehkranz des Kugellenkkranzes 14 ist auf der Halbschale mittels seiner Wälzlager 30 drehbar gelagert und mit den Verbindungsflanschen 31 bzw. der schematisch angedeuteten, bei 32 drehbar gelagerten Zugdeichsel 7 verbunden. Die Tragplatte 10 ist nach vorne hin an ihrer vorderen Außenkante 24 durch einen Querträger 22 mit U-förmigem Querschnittsprofil begrenzt, der sich oberhalb der Tragplatte 10 und teilweise an dem Tragrahmen 15 anliegend bis zu den seitlichen Außenkanten 23 erstreckt. Die Längsträger 9 mit ihrem Doppel-T-förmigen Querschnittsprofil weisen in ihrem vorderseitigen Endbereich Flansche 34 zur verwindungssteifen Verbundung mit dem äußeren Versteifungsträger 11 auf.

**Patentansprüche**

1. Anhänger (1) für Lastkraftwagen oder dgl. Zugmaschinen mit einem Chassis (2), das ein eine im Bereich oberhalb der lenkbaren Vorderachse (4) angeordnete Tragplatte (10) mit Versteifungen (11,12) an deren Unterseite umfassendes Tragwerk (8) sowie mit diesem verbundene Längsträger (9) aufweist, wobei das Tragwerk (8) an seiner Unterseite mit einem Kugellenkkranz (14) für die Abstützung der Vorderachse (4) verbunden ist, die Tragplatte (10) einen die Vorderräder (3) im Lenkbewegungsbereich der Vorderachse (4) übergreifenden, von einem inneren Versteifungsträger (12) sowie einem äußeren Versteifungsträger (11) begrenzten Ringsegmentbereich aufweist, **dadurch gekennzeichnet,** daß der innere und der äußere Versteifungsträger (11,12) aus durchgehenden, gebogenen U-Profilstreben bestehen, die mit ihren einander zugewandten Schenkein (25,26) den Ringsegmentbereich des Tragwerks (8) begrenzen und mit der als flacher Plattenkörper ausgebildeten Tragplatte (10) verschweißt sind, und der innere Versteifungsträger (12) eine geringere Querschnittsabmessungen hat als der äußere Versteifungsträger (11).

2. Anhänger nach Anspruch 1, **dadurch gekennzeichnet,** daß der Ringsegmentbereich des Tragwerks (8) nach vorne hin in von geradlinig verlaufenden Außenkanten (23,24) begrenzten Bereichen ausläuft.

3. Anhänger nach Anspruch 1 oder 2, **dadurch gekennzeichnet,** daß die Tragplatte (10) aus mehreren miteinander verbundenen Plattenkörperteilen besteht.

4. Anhänger nach einem der Ansprüche 1 bis 3, **dadurch gekennzeichnet,** daß jeweils oberhalb einer Hinterachsabstützung (13) angeordnete Innenträger bildende Längsträger (9) des Chassis (2) am äußeren Versteifungsträger (11) direkt befestigt sind.

## Claims

1. Trailer (1) for lorries or similar prime movers with a chassis (2) which has a supporting framework (8) embracing the underside of a support plate (10) with reinforcements (11, 12) mounted in the region above the steerable front axle (4) and also has longitudinal bearers (9) connected with the said supporting framework, which supporting framework (8) is connected at its underside with a ball race (14) for the support of the front axle (4), the support plate (10) having a ring segment region extending over the front wheels (3) in the steering motion range of the front axle (4) and defined by an inner reinforcement support (12) as well as an outer reinforcement support (11), characterized in that the inner and the outer reinforcement supports (11, 12) consist in through bent channel-shaped bars which by means of their facing legs (25, 26) define the ring segment region of the supporting framework (8) and are welded with the support plate (10) designed as a flat plate element, and the inner reinforcement support (12) has smaller cross-sectional dimensions than the outer reinforcement support (11).

2. Trailer according to claim 1, characterized in that the ring segment region of the supporting framework (8) extends forward in regions defined by outer sides (23, 24) extending in a straight line.

3. Trailer according to either claim 1 or 3, characterized in that the support plate (10) is formed of several plate element parts joined together.

4. Trailer according to one of claims 1 to 3, characterized in that longitudinal supports (9) of the chassis (2) forming inner supports mounted in each instance above a rear axial support (13) are directly secured to the outer reinforcement support (11).

## Revendications

1. Remorque (1) pour camions ou tracteurs analogues, comprenant un châssis (2) qui comporte une structure porteuse (8) comprenant un plateau de support (10) disposé dans la zone située au-dessus de l'essieu avant directeur (4) et pourvu, au niveau de sa face inférieure, d'éléments raidisseurs (11, 12) ainsi que des poutres longitudinales (9) reliées à cette structure, la structure porteuse (8) étant reliée, à sa face inférieure, à une couronne de direction à billes (14) pour le support de l'essieu avant (4) et le plateau de support (10) comportant un domaine à segment d'anneau chevauchant les roues avant (3) dans le domaine du mouvement de braquage de l'essieu avant (4) et délimité par un élément raidisseur interne (12) et par un élément raidisseur externe (11), caractérisée en ce que l'élément raidisseur interne et l'élément raidisseur externe (11, 12) sont formés de profilés en U courbés, continus, qui, par leurs ailes (25, 26) tournées l'une vers l'autre, délimitent le domaine à segment d'anneau de la structure porteuse (8) et sont soudés au plateau de support (10) ayant la forme d'un plateau plat, et l'élément raidisseur (10) interne présente des dimensions en coupe qui sont plus petites que celles de l'élément raidisseur externe (11).

2. Remorque suivant la revendication 1, caractérisée en ce que le domaine à segment d'anneau de la structure porteuse (8) se termine vers l'avant dans des domaines délimités par des bords extérieurs rectilignes (23, 24).

3. Remorque suivant la revendication 1 ou 2, caractérisée en ce que le plateau de support (10) est formé de plusieurs pièces de plateau unies les unes aux autres.

4. Remorque suivant l'une quelconque des revendications 1 à 3, caractérisée en ce que des poutres longitudinales (9) du châssis (2) formant des poutres intérieures disposées au-dessus d'un support d'essieu arrière (13) sont fixées directement à l'élément raidisseur externe (11).

*Fig.1*

_Fig. 2_

_Fig. 3_

Fig.4

Fig. 5

Fig.6